# EUROPEAN PATENT APPLICATION

(11) **EP 2 896 331 A1**
(43) Date of publication of application: **22.07.2015**
(21) Application number: 15154214.9
(22) Date of filing: 18.01.2012
(51) Int. Cl.: A47J 31/00, A47J 31/40

(54) **Chocolate beverage**

(30) Priority: 19.01.2011 GB 201100942
(62) Divisional of application: 13154781.2
(71) Applicant: Kraft Foods R & D, Inc., Deerfield, IL 60015 (US)
(72) Inventor: Burkhalter, Sarah, Banbury, Oxfordshire OX16 2QU (GB)
(74) Representative: Boult Wade Tennant

(57) **Abstract**

A kit for preparing a chocolate beverage, the kit comprising a first container containing at least a chocolate beverage ingredient for transferring into a beverage receptacle and a second separate container for use in a beverage preparation machine and containing at least milk solids.

## Description

This disclosure relates to an improved beverage kit. In particular, a kit for preparing a chocolate beverage that can be used to prepare a beverage in a single preparation step having an attractive appearance and high chocolate solids. The disclosure also relates to a method of manufacturing the beverage from the kit.

When consumers buy foamed beverages at cafes and restaurants, the beverage is commonly made from a flavouring ingredient and a separately foamed amount of milk. The ingredients are commonly in the forms of a powder, a paste or a syrup. The milk is commonly heated and foamed using a source of steam. In preparing the beverage, the concentrated ingredients are placed in a cup or mug and the hot foamed milk is added. Care is typically taken to retain the frothiest portion of the milk till last so that a white uppermost foam layer can be produced on the beverage which has the greatest possible foam size. As a final garnish, cocoa or chocolate sprinkles are often added to the beverage.

It is known that consumers also appreciate the convenience of being able to make the same foamed beverages at home or in the work place where it is not possible to have a source of steam-prepared hot foamed milk. Home hot-chocolate preparation is discussed in US2546514. In this way, foaming creamers have been developed and are known for use in preparing foamed beverages at the consumers' convenience. However, when preparing instant beverages the creamer is typically mixed with the flavouring component, either in the instant preparation or in the already diluted beverage. In this way the foam that is provided on top of the beverage adopts unsightly discolouration from the flavouring component. This reminds the consumer that the instant beverage is distinct from the foamed beverages available at coffee shops or restaurants and lessens the beverage experience.

As an alternative, it is known to produce a beverage in a home beverage preparation machine by using a two-capsule system. A first capsule is used to form a first flavoured portion of a beverage by passing a hot medium through ingredients, such as ground coffee, and in a second step a second capsule is used to form a milky second portion of the beverage. This two-step process is unduly complicated and may not necessarily result in a white foam. The consumer has to be present to initiate the use of each capsule. EP1985213, for example, discloses the production of a beverage by injecting a cold beverage medium through two capsules sequentially placed in a beverage preparation machine.

WO2006/043102 discloses the use of two ingredient pads placed together in a beverage machine brewing chamber. The beverage is produced by passing the beverage medium through both pads sequentially in a single operation. This produces a mixed beverage formed from the ingredients of each pad. If a foam were to be produced by this method, the mixing would lead to a non-white foam.

Accordingly, it is desirous to provide an improved beverage composition and/or tackle at least some of the problems associated with the prior art or, at least, to provide a commercially useful alternative thereto.

In a first aspect the present disclosure provides a kit for preparing a chocolate beverage, the kit comprising a first container containing at least a chocolate beverage ingredient for transferring into a beverage receptacle and a second separate container for use in a beverage preparation machine and containing at least milk solids.

The present disclosure will now be further described. In the following passages different aspects of the disclosure are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Other objects and features of the disclosure will be in part apparent and in part pointed out hereinafter.

All percentages are by weight and, where appropriate, by dry weight, unless otherwise stated. As will be appreciated, the term "dry weight" when used herein with reference to liquid, gel or paste ingredients simply refers to the weight of that ingredient before the addition of the aqueous medium used to form the beverage medium.

Beverage machines are well known in the art. Preferable beverage machines for use with the kit disclosed herein are so-called low pressure beverage preparation machines that operate at up to 3.5bar. The use of a beverage machine provides a number of advantages to the consumer; primarily the simplicity of producing the beverage. Using the kit described herein, a café style chocolate beverage can be prepared in a single preparation step.

The beverage of the present disclosure has a number of advantages over conventional chocolate beverages, including a high solids content and an attractive white/sprinkled foam appearance. The method of preparation can be performed in a single step from dry powder ingredients. Advantageously the method provides an attractive beverage with optimal simplicity for the consumer. Where liquid, paste or gel ingredients are used, the method of preparation can also be performed in a single step.

The kit comprises a first container containing at least a chocolate beverage ingredient. Preferably the first container is in the form of a sachet or a multi-serving pot. The first container is more preferably in the form of a sachet or stickpack so that it can be readily opened by a consumer and emptied into a receptacle, such as a mug or cup, to transfer the contents. Sachets or stickpacks preferably contain a single serving that is fully emptied into a mug after the sachet is opened, or part emptied to provide a desired taste strength by the consumer. For the avoidance of doubt, the first container is preferably not a machine insertable container. Preferably the first container is selected so that the contents may be poured or emptied into the receptacle separately from any beverage medium. That is, the contents of the first container are preferably not flushed from the container by the introduction of beverage medium into said container. Preferably the first container is sealed before use.

The chocolate beverage ingredient is suitable for making a beverage chocolaty when it is mixed with a beverage medium. The chocolate beverage ingredient preferably comprises cocoa solids and/or cocoa butter. Preferably the chocolate beverage ingredient consists of cocoa solids and/or cocoa butter. Cocoa solids are preferably cocoa powder and this includes full- or reduced-fat (de-fatted) cocoa powder. Cocoa solids and cocoa butter are commonly obtained from cocoa mass (finely ground cocoa nibs). In one embodiment the chocolate beverage ingredient may comprise both cocoa solids and cocoa butter and optionally be provided in the form of cocoa mass, which results in a less processed final product. Similarly, in another embodiment, the first container may contain chocolate comprising the chocolate beverage ingredient in addition to the further ingredients required to form the chocolate.

Suitable chocolate beverage ingredients are well known and may be bought commercially. The chocolate beverage ingredient preferably comprises at least cocoa solids to form a dark or milk chocolate blend. In another embodiment, so as to provide a white chocolate beverage, the chocolate beverage ingredient comprises at least cocoa butter. For a white chocolate beverage, the chocolate beverage ingredient preferably does not include cocoa solids.

Preferably the first container contains the chocolate beverage ingredient and one or more further ingredients. The further ingredients are preferably selected from one or more of flavourings, thickeners, emulsifiers, lecithin, free flow agents, sweeteners, sugars, salt, milk creamer and/or milk powder. These ingredients are well known in the art. It is particularly preferred that the first container contains sugars. Milk creamer includes whiteners. The use of added milk powder or milk creamer can be used to increase the milkiness of the final beverage by providing additional milk solids to those dispensed from the second container. When the first container holds chocolate, the chocolate will comprise a chocolate beverage ingredient as well as the further ingredients that form the chocolate (such as sugars).

The chocolate beverage ingredient and any optional further ingredients which form the contents of the first container are preferably provided as a dry powder. Preferably the dry powder is a blended mix of the ingredients. The use of a dry powder allows for easy handling of the chocolate beverage ingredient by the consumer. Furthermore, a dry powder facilitates the ready use of a larger bulk container as the first container. The use of a dry powder is preferred because it is easier for the contents first container to be transferred to the receptacle. In addition it is especially preferred to use a dry powder containing cocoa solids, because when a beverage medium is added to a dry powder some of the powder may be entrained and carried to the beverage surface to provide a chocolate sprinkled appearance. Thus a beverage can be produced that more closely simulates the café experience. The surprising simulated sprinkles provide an enhanced experience for the user without requiring a separate portion of sprinkles to be provided to the consumer that would require a further application step to be carried out to finish the beverage. In another embodiment, the chocolate beverage ingredient may be in liquid, gel or paste form. Such forms are advantageous because they dissolve and/or disperse easily to form a final beverage.

Preferably the chocolate beverage ingredient forms from 5 to 30% (by dry weight) of the contents of the first container. The remainder of the contents of the first container will be further ingredients and, in particular, sugars and milk solids. More preferably the chocolate beverage ingredient forms from 10 to 25% of the contents of the first container. Preferably the total contents of the first container are from 3 to 75g, more preferably from 5 to 50g and most preferably from 10 to 30g. The foregoing weight ranges are each individually applicable to the above chocolate beverage ingredient content ranges. Preferably the chocolate beverage ingredient is cocoa solids in the form of cocoa powder.

The present kit and method are particularly advantageous over conventionally machine-prepared beverages because the chocolate beverage ingredient is placed in the receptacle before preparation. Accordingly, the amount of chocolate beverage ingredient in the final beverage is not limited to the amount extractable or dissolvable from a beverage cartridge in a beverage preparation machine. Thus a high cocoa solids and/or cocoa butter beverage with a strong and desirable flavour may be prepared at home form a low pressure beverage machine.

Flavourings can be used to prepare flavoured chocolate beverages such as a chocolate mint beverage or the like. The flavourings are preferably included in the first container but, in a less preferred embodiment may be included in the second container and optionally in both containers. Suitable flavourings are well known in the art and include orange, vanilla, mint, ginger, chilli, hazelnut, coconut, cinnamon, strawberry (particularly for a white chocolate beverage), raspberry, banana, toffee, and banoffee. Alternatively, a flavouring may be coffee, preferably provided by the inclusion of soluble coffee to produce a mocha beverage. If coffee is included it is preferably included in the first container to avoid discolouration of the foam.

The kit comprises a second container containing at least milk solids and suitable for use in a beverage preparation machine. That is, the container is machine insertable.

Accordingly, in use an aqueous medium is passed by the beverage preparation machine through the second container so as to form a beverage medium (or beverage portion) containing at least some of the milk solids and to dispense the beverage medium into the receptacle. Preferably substantially all of the milk solids will be taken into the beverage medium before it is dispensed. For simplicity, the term "milk product" is used herein to refer to the beverage medium formed from the aqueous medium and the milk solids. Preferably the aqueous medium of the final beverage consists of the aqueous medium provided by the beverage preparation machine and more preferably the aqueous medium of the beverage consists of medium passed through the second container. It will be appreciated that there may also be an aqueous component to the final beverage provided by the beverage ingredients held before-use in the first or second containers. Preferably, no aqueous medium passes through the first container.

Preferably the second container is in the form of a cartridge, capsule, pod or pad. More preferably the second container comprises a pad, preferably made of filter paper. Accordingly, the second container is preferably sufficient for a single serving only. Pads are discussed in, for example, EP0756844. The second container is separate from the first container and the containers are not attached to or enclosed within each other as in EP0756844. Cartridges and pods for holding liquid ingredients such as milk are known in, for example, EP1676786. The first and second containers are preferably of a different form and design. It may be desirable for the second container to be sealed or wrapped before use to prevent ingredient loss or spoiling.

The milk solids contained in the second container are preferably at least the proteins and/or lactose and/or carbohydrates from milk. Preferably the milk solids contain proteins and carbohydrate from milk. The milk solids may be prepared from whole milk or a reduced fat milk. Reduced fat milks such as skimmed or semi-skimmed milks may be preferred to provide a lower fat beverage. The milk may be treated according to conventional techniques and is preferably filtered and/or ultrafiltered and/or pasteurised.

The milk solids are preferably provided in a dry powder form to be dissolved in an aqueous medium to form the milk product. Preferably the contents of the second container are provided as an agglomerated dry powder since this provides fast and reliable dissolution properties, particularly in a low pressure system. Agglomeration techniques for powders are well known in the beverage preparation field. A preferred form for the milk solids is an agglomerated dried milk powder.

In an alternative embodiment the milk solids may be provided in the second container as a liquid milk ingredient, preferably a concentrated liquid milk ingredient. Such liquid ingredients are known for use in machine-dispensable cartridges. Suitable liquid milk compositions are known and discussed in, for example, EP1676786.

In one embodiment, the second container may further hold additional ingredients together with the milk solids, such as ingredients selected from flavourings, thickeners, emulsifiers, lecithin, free flow agents, sweeteners, sugars and salt, and mixtures thereof, as described herein.

In one embodiment, the kit described herein is packaged as a single serve package for sale or for use by a consumer. Thus, a particularly preferred kit comprises a filter pad containing dry agglomerated milk solids and a sachet of chocolate beverage powder.

According to a second aspect, the present disclosure provides a method for preparing a chocolate beverage comprising the steps of:
providing a kit as described herein;
transferring at least a portion of the contents of the first container into a beverage receptacle; and
dispensing a beverage medium from a beverage preparation machine into the beverage receptacle, whereby the beverage medium is formed by passing an aqueous medium through the second container.

Preferably the aqueous medium of the final beverage consists of the aqueous medium provided by the beverage preparation machine and more preferably the aqueous medium of the beverage consists of medium passed through the second container. It will be appreciated that there may also be an aqueous component to the final beverage provided by the beverage ingredients held before use in the first or second containers. Preferably, no aqueous medium passes through the first container. It will be appreciated that some beverage medium could intentionally (for dilution) or unintentionally (leaks) bypass the second container without falling outside the scope of the present invention.

Advantageously it has been found that the separation of the chocolate beverage ingredient from the milk-solids-containing beverage medium means that fat in the cocoa butter and/or cocoa powder does not interfere with the foam that is produced and hence a foam having greater stability and longevity is produced. In contrast, instant compositions comprising combined creamer/foamer and chocolate ingredients for reconstitution with boiling water tend to have poor foam stability as well as a brown/pink discoloured foam.

Thus, the beverage is prepared from the kit disclosed herein in a single preparation step using the beverage preparation machine. Preferably the method further comprises a further step of stirring the contents of the beverage receptacle.

The term "transferring" is used in relation to the first container preferably to denote pouring of the composition into a receptacle. That is, the term preferably does not include flushing the chocolate beverage ingredient into the receptacle, such as with a beverage preparation machine. The term "dispensing" in relation to the second container to indicate the flushing, extraction or dissolution of the ingredients by a beverage preparation machine into the receptacle.

The aqueous medium used to prepare the milk product is preferably water. Preferably the water is heated and contacts the contents of the second container at a temperature of from 50 to 100°C, more preferably from 65 to 95°C and most preferably from 75 to 90°C. Preferably from 50 to 300ml of aqueous medium are used to prepare a beverage, more preferably from 100 to 150ml.

In one embodiment, the method of the present disclosure comprises emptying a sachet of chocolate beverage powder (containing the chocolate beverage ingredient and any further ingredients) into a receptacle and then dispensing a milk product onto the powder to form a final beverage. The milk product is formed by passing a beverage medium through the second container containing milk solids. The milk product is preferably dispensed from a beverage machine that uses filter pods/cartridges. Filter pods made from filter paper are especially preferred. As a consequence of the present method, the milk product initially overlies the beverage powder. The beverage powder is then preferably stirred by the consumer into the body of the beverage. If the beverage is stirred after the beverage preparation machine has finished then a beverage can be obtained that retains a white foam.

In one embodiment the first container may also contain a booster powder (also known as a foam booster agent) to be placed in the receptacle. The booster powder may be mixed with or simply packaged with the chocolate beverage ingredient and any further ingredients. Preferably the ingredients are mixed together in a single container. Advantageously, the inclusion of a booster powder leads to a highly foamed beverage. This is because the booster powder is initially trapped under the added milk product. Due to the presence of milk proteins in the milk product, an efficiently foamed beverage is prepared compared to preparing a beverage by directly mixing the booster and a water beverage medium.

A foam booster agent is one which, upon addition of a liquid, induces the formation of or forms a foam. It is preferred that the foam booster ingredient comprises a matrix comprising carbohydrate and/or protein, preferably milk protein, and entrapped gas. The gas is preferably present in an amount to release upon addition of liquid at least about 1ml of gas at ambient conditions per gram of booster. Such ingredients are disclosed in WO01/08504 which is incorporated herein by reference. For the avoidance of doubt, where the beverage ingredients are in liquid, gel or paste form, the foam booster requires the addition of additional liquid to form a foam.

Optionally the milk product is foamed when it is dispensed by the presence of foam booster agent in the second container and/or by using means for foaming in the beverage preparation machine to foam the milk product as it is dispensed. Such means for foaming includes eductors and/or impact surfaces. Such means for foaming and foaming ingredients are well known in the art.

According to a third aspect, the present disclosure provides a kit comprising a plurality of first containers as described herein and a plurality of second containers as described herein in a common package. Such packs may include one or more flavoured alternatives to provide variety to the consumer.

According to a fourth aspect, the present disclosure provides a beverage dispensing system comprising a kit as described herein and a beverage preparation machine to receive the second container and to dispense a beverage therefrom by the addition of an aqueous beverage medium.

### Figures

The invention will now be described further with reference to the following figures, provided by way of non-limiting examples:
Figure 1 shows a flow chart summarising steps in the method described herein.

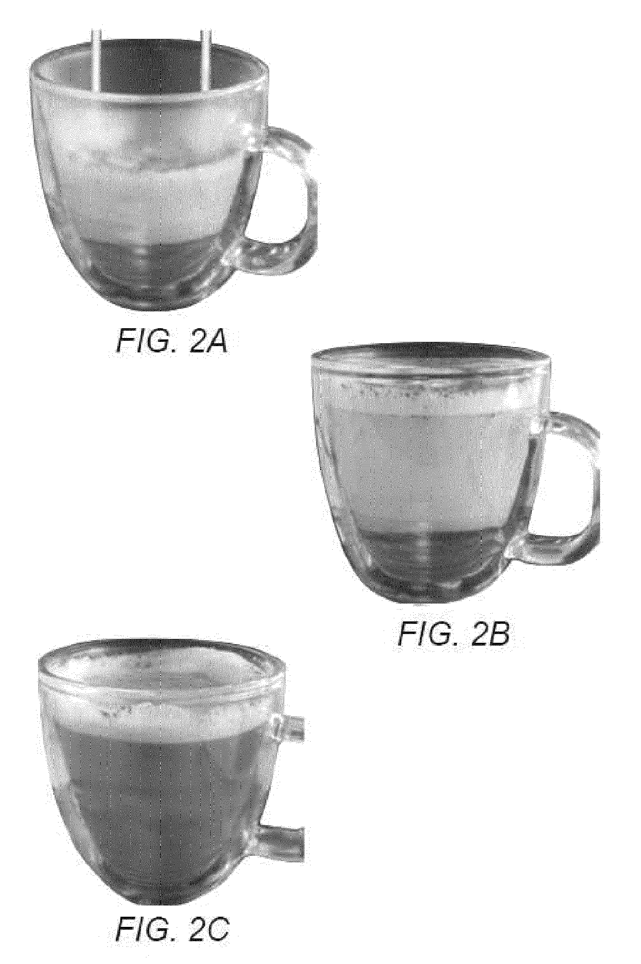

Figure 2 shows three pictures of taken during the preparation of a beverage as described herein. In figure 2A the contents of the second container are being dispensed into a receptacle onto the contents of the first container. In figure 2B the beverage is fully dispensed. In figure 2C the beverage has been stirred. Note the darker chocolate-like sprinkle effect clearly visible on top of the white foam of the beverage.

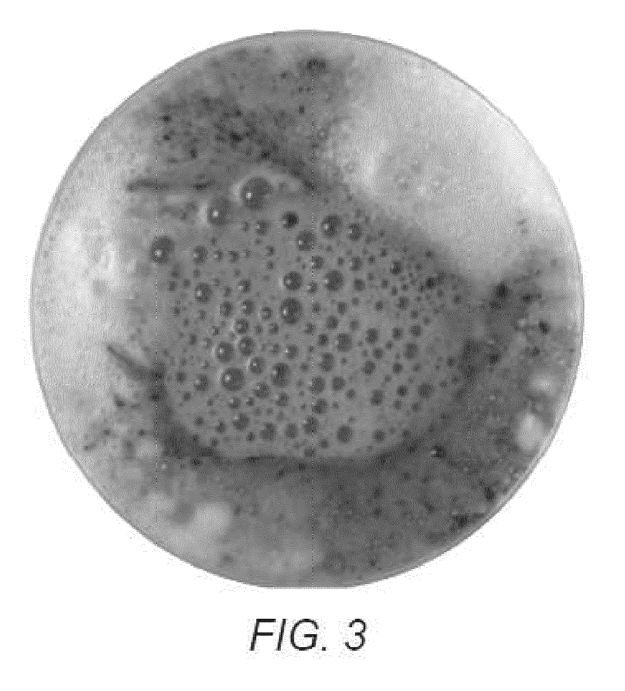

Figure 3 shows a top-down view of the final beverage having a white foam and a chocolate-like sprinkle effect.

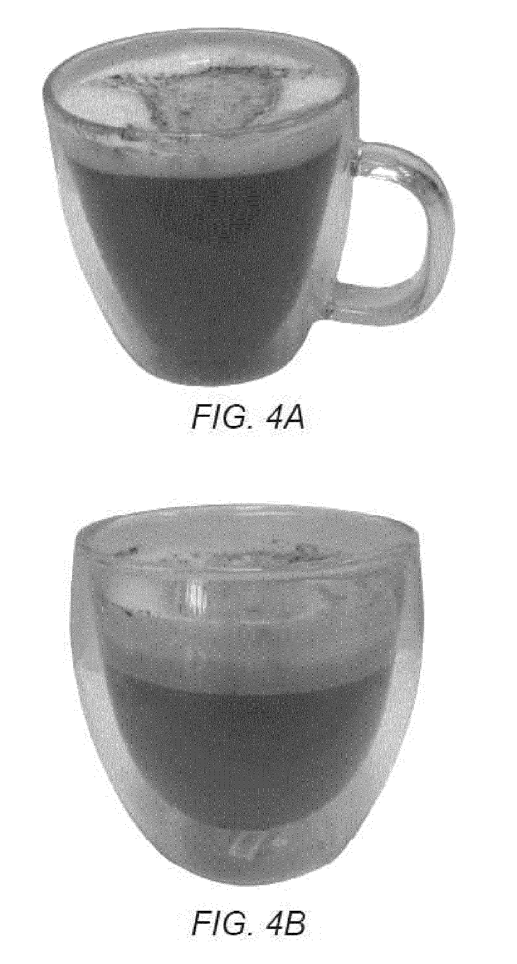

Figure 4 shows the advantages of adding a foam booster to the contents of the first container. The foam height has been increased while the white foam has been retained.

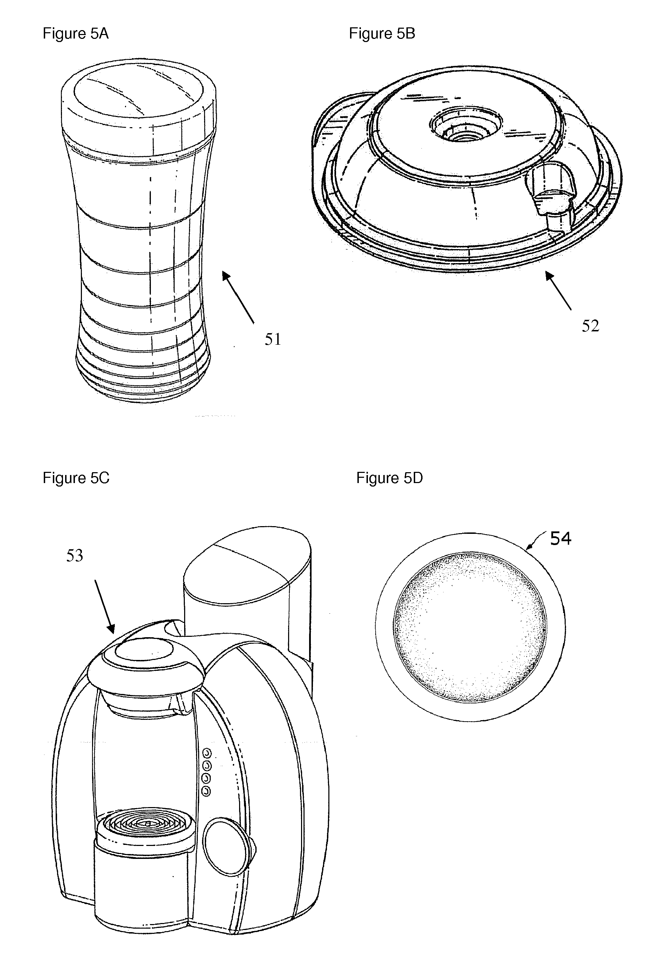

Figure 5A shows a typical package 51 for use as the first container as described herein, such as might be used for retail of a product. Figure 5B shows a cartridge 52 suitable for use as the second container as described herein and for use in a beverage producing machine 53. Figure 5C shows a beverage preparation machine 53 suitable for use with the cartridge 52 shown in figure 5B. Figure 5D shows a filter paper pad.

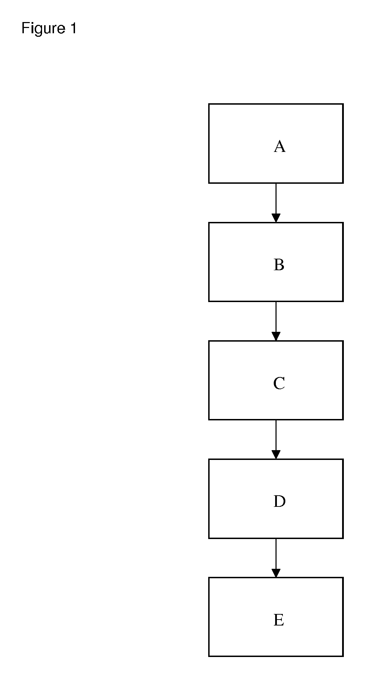

With reference to figure 1, the method described herein will now be explained. In a first step A, a first container containing a chocolate beverage ingredient is emptied into a receptacle such as a mug. In a second step B, a milk solids-containing filter pad is placed in a beverage preparation machine and the receptacle is placed to receive fluid dispensed from the machine.

In step C, the machine is operated so as to pass a beverage medium, preferably water and preferably at a temperature from 50 to 100°C, more preferably 75 to 90°C, through the filter pad. As a result a beverage portion containing the milk powder is dispensed into the receptacle and a drink is formed over the dispensing period.

In optional step D the beverage is stirred so as to encourage the chocolate beverage ingredients to distribute evenly. In step E the beverage is consumed by the consumer who can experience the café-like experience of a chocolaty beverage with an attractive white foam and a chocolate sprinkled effect.

The disclosure will now be described in relation to several non-limiting examples.

### Example 1.

A first sachet was provided including 19g of an existing dry powder chocolate beverage composition.

The composition comprised (by weight):
Sugar 42%
Cocoa Powder 12% (as the chocolate beverage ingredient)
Skimmed Milk Powder 9%
Milk Creamer (Coffee Whitener) 35%
Flavours <2%
Salt <1%
Free flow agent <1%

The first sachet was opened and emptied into a mug. A second container in the form of a filter paper pad containing 4.5g of a commercially available agglomerated skimmed-milk powder was placed in a low pressure on-demand soft-pod brewer, such as a Privilege^{tm} machine, and operated in accordance with its instructions to brew a single cup of beverage into the mug placed under the brewer outlet. The button for 1 brew quantity was activated and 130ml of hot milk solution was delivered on top of the powder, along with 25ml of foam with a white/off-white appearance. During brewing, cocoa powder 'sprinkles' were carried to the top of the foam.

### Example 2.

A white chocolate beverage was prepared according to Example 1 with the first sachet being replaced with a sachet holding 20g of a commercially available white chocolate powder. A white beverage and foam resulted. The powder contained no cocoa powder and instead contained a similar amount of cocoa butter as the chocolate beverage ingredient.

### Example 3.

The first container held 19g of a commercially available Chocolate powder composition. The second container was a Tassimo^{tm} standard size milk disc holding a 21.5g of preparation of lactose & mineral-reduced ultrafiltered milk concentrate with sugar. The contents of the first container were emptied into a mug and the contents of the second container were dispensed into the mug using a suitable beverage preparation machine. The volume delivered in this instance is 60ml liquid + 20ml foam. A white-foamed chocolate beverage was produced having a sprinkled appearance.

### Example 4.

A beverage was prepared according to example 3, but with large Tassimo^{tm} milk disc containing a 52g of preparation of lactose and mineral-reduced ultrafiltered milk concentrate with sugar, delivering 125ml liquid and 50ml foam.

As will be appreciated, a chocolate paste as described herein could alternatively be used in the foregoing examples in place of the chocolate powder compositions.

When introducing elements of the present disclosure or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

Although preferred embodiments of the disclosure have been described herein in detail, it will be understood by those skilled in the art that variations may be made thereto without departing from the scope of the disclosure or of the appended claims.

## Claims

1. A kit for preparing a chocolate beverage, the kit comprising a first container containing at least a chocolate beverage ingredient for transferring into a beverage receptacle and a second separate container for use in a beverage preparation machine and containing at least milk solids.

2. A kit according to claim 1, wherein the chocolate beverage ingredient is selected from one or both of cocoa solids and cocoa butter.

3. A kit according to claim 1 or claim 2, wherein the first container further contains one or more ingredient selected from flavourings, thickeners, lecithin, free flow agents, emulsifiers, sweeteners, sugars, salt, milk creamer and/or milk powder.

4. A kit according to any of the preceding claims, wherein the first container contains a dry powder blend comprising the chocolate beverage ingredient.

5. A kit according to any of claims 1 to 3, wherein the first container contains a liquid, paste or gel composition comprising the chocolate beverage ingredient.

6. A kit according to claim 4 or claim 5, wherein from 5 to 30% by dry weight of the dry powder blend, or of the liquid, paste or gel composition is cocoa solids.

7. A kit according to any of the preceding claims, wherein the first container further contains a foam boosting agent.

8. A kit according to any of the preceding claims, wherein the second container contains (i) a dry agglomerated powder comprising milk solids; or (ii) a liquid milk ingredient.

9. A kit according to any of the preceding claims, wherein the second container is in the form of a cartridge, capsule, pod or pad.

10. A kit according to claim 9, wherein the second container comprises a pad, preferably made of filter paper.

11. A kit according to any of the preceding claims, wherein the first container is in the form of a sachet or a multi-serving pot.

12. A method for preparing a chocolate beverage comprising the steps of:
providing a kit according to any of claims 1 to 11;
transferring at least a portion of the contents of the first container into a beverage receptacle; and
dispensing a beverage medium from a beverage preparation machine into the beverage receptacle, whereby the beverage medium is formed by passing an aqueous medium through the second container.

13. A method according to claim 12, wherein the method further comprises a step of stirring the contents of the beverage receptacle.

14. A kit according to any of claims 1 to 11 comprising a plurality of first containers and a plurality of second containers in a common package.

15. A beverage dispensing system comprising a kit according to any of claims 1 to 11 and a beverage preparation machine to receive the second container and to dispense a beverage medium therefrom by the addition of an aqueous medium.
